# EUROPEAN PATENT SPECIFICATION

(11) **EP 0 553 558 B1**
(45) Date of publication and mention of the grant of the patent: **12.06.1996**
(21) Application number: 92311535.6
(22) Date of filing: 17.12.1992
(51) Int. Cl.: F16L 55/165, F16L 55/18

(54) **Method for lining a pipeline**
Verfahren zum Innenverkleiden eines Rohres
Procédé de revêtement de l'intérieur d'une conduite

(30) Priority: 28.01.1992 JP 38548/92
(43) Date of publication of application: 04.08.1993
(73) Proprietor: ASHIMORI INDUSTRY CO., LTD., Osaka-shi, Osaka-fu (JP); ASHIMORI ENGINEERING CO., LTD, Tokyo-to, 113 Japan (JP)
(72) Inventor: Imoto, Takayoshi, Otsu-shi, Shiga-ken, 520-01 (JP); Seshimo, Masahiro, Nishinomiya-shi, Hyogo-ken (JP); Onishi, Shinji, Miki-shi, Hyogo-ken (JP)
(74) Representative: Harrison, David Christopher

(56) References cited:
- EP-A- 0 228 998
- GB-A- 2 018 384
- GB-A- 2 188 695
- US-A- 3 261 374
- US-A- 3 996 967

## Description

The present invention relates to a method for lining a pipeline such as underground sewage pipes for reinforcement or repair.

There is a known method for lining a pipeline, which consists of inserting into the pipeline a tubular lining material composed of fibres impregnated with a curable liquid resin, inflating the lining material by means of a pressure fluid until it comes into close contact with the inner surface of the pipeline, and switching from the pressure fluid to a heating fluid such as pressurized steam, thereby heating the lining material, curing the curable liquid resin, and forming a rigid pipe in the pipeline.

The lining material for sewage pipelines is usually based on a sheet moulding compound (SMC) in a tubular form (either a closed tube or one with overlapping longitudinal edges) which is composed of a curable liquid resin (such as unsaturated polyester resin) and glass fibres dispersed therein, with the liquid resin partly cured.

One way of lining of a pipeline by the above-mentioned method requires that the lining material be heated so as to cure the curable liquid resin. The curing of the curable liquid resin takes place at a speed proportionate to the heating temperature. In the case of an unsaturated polyester resin, reaction proceeds rapidly and curing takes place rapidly within several minutes due to self-heating properties, when it is heated to 100°C.

It is only possible to heat a lining material from inside, and since the supplied heat is transmitted from the outside of the lining material to a pipeline and surrounding soil, it is necessary to supply a large amount of heat to the inside of the lining.

The simplest way to heat a lining material from inside is to introduce a large amount of pressurized steam into pipeline inside the lining material, but if the lining material is to be heated sufficiently with pressurized steam, it is necessary for the latter to be at quite elevated pressures. If the lining material is to be heated through to a temperature higher than 100°C it is necessary to use steam which is pressurized above 3kg/cm² (1 kg/cm² = 98,1 KPa).

Unfortunately, the Hume pipe commonly used for sewage pipelines has a rather low pressure resistance. It is broken when it experiences an internal pressure higher than 2kg/cm². Time-worn pipelines often break at a pressure of 1kg/cm² or below.

For this reason, the conventional method does not permit the introduction of steam at a sufficiently high pressure. Therefore, the curable liquid resin takes a long time to cure.

The present invention was completed in view of the foregoing. It is an object of the present invention to provide a method for lining a pipeline by heating the lining material adequately, e.g. above 100°C, and rapidly curing the curable liquid resin to complete the lining, without exerting unacceptably high pressure on the lining material.

The present invention resides in a method for lining a pipeline which comprises the steps of placing in a pipeline a tubular lining material composed of fibres impregnated with a curable liquid resin, inflating the lining material by means of a pressure fluid until the lining material comes into close contact with the inner surface of the pipeline, and moving from one end to the other end of the lining material a nozzle emitting pressurized steam, thereby heating the lining material with the pressurized steam and curing the curable liquid resin.

A first preferred aspect of the present invention resides in a method for lining a pipeline which comprises the steps of placing in a pipeline a tubular lining material composed of fibres impregnated with a curable liquid resin, inflating the lining material by means of a pressure fluid until the lining material comes into close contact with the inner surface of the pipeline, introducing a heated fluid into the lining material for preheating, and moving from one end to the other end of the lining material a nozzle which emitting pressurized steam, thereby heating the lining material with the pressurized steam and curing the curable liquid resin.

According to a second preferred aspect of the present invention, the first and second aspects of the present invention are modified such that the nozzle is moved together with a drainage removing unit which is positioned in front of the nozzle in the lining material.

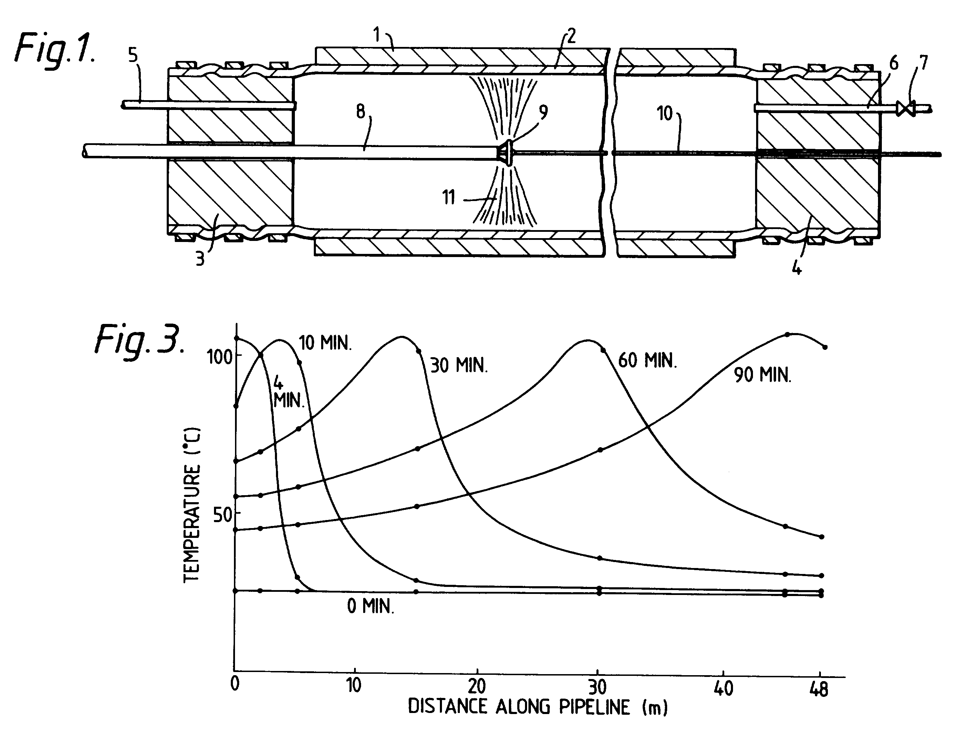

Embodiments of the invention will now be described with reference to the drawings, wherein Fig. 1 is a schematic diagram showing how the lining of a pipeline is accomplished by a method of the present invention;
Fig. 2 is a longitudinal sectional view showing figures a), b) and c) respective drain removing units;
Fig. 3 is a diagram showing the temperature change in the lining material which takes place when the lining material is heated when using drain removing units;
Fig. 4 is a diagram showing the temperature changing in the lining material which takes place when the lining material is heated by a method including preheating; and
Fig. 5 is a diagram showing the temperature change in the lining material which takes place when the lining material is heated by the conventional method.

In Fig. 1, there are shown a pipeline 1 and a lining material 2 inserted into it. The lining material 1 is closed at its both ends by metal parts 3 and 4. One metal part 3 is provided with an air pipe 5, and the other metal part 4 is provided with an exhaust pipe 6.

The lining material 2 is inflated under pressure against the inner surface of the pipeline 1 by introducing compressed air through the air pipe 5. It can be discharged through the exhaust pipe 6, with the valve 7 properly controlled. The pressure fluid to inflate the lining material 2 should have a pressure high enough to bring the lining material into contact with the inner surface of the pipeline. An adequate pressure is 0.2-1.0 kg/cm².

There is shown a steam hose 8. It slidably penetrates the metal part 3 and has a nozzle 9 at its forward end. This nozzle 9 is designed to radially spray the pressurized steam delivered through the steam hose 8. In addition, the nozzle 9 is connected to a rope 10 which slidably penetrates the metal part 4, so as to be pulled by the rope.

In Fig. 1, the nozzle 9 is shown as the centre axis of pipeline. This is an idealized illustration, and in real life the nozzle 9 will tend to rest on the lower part of the lining material due to its weight. Such a state is acceptable.

With the lining material 2 inflated by the pressure fluid, pressurized steam 11 is supplied through the steam hose 8 and emitted from the nozzle 9, so that the pressurized steam 11 impinges upon the inside of the lining material 2.

The pressurized steam 11 should preferably have a pressure higher than 3kg/cm² so that the steam heats the lining material 2 sufficiently.

As the pressurized steam 11 blows into the lining material 2, the pressure inside the lining material 2 tends to increase, but pressure fluid is discharged through the exhaust pipe 6, so that the pressure in the lining material 2 is kept constant.

While the pressurized steam 11 is blowing from the nozzle 9, a rope 10 is pulled from outside the metal part 4, so that the nozzle 9 moves from the left end to the right end of the lining material 2 in Fig. 1. The movement of the nozzle 9 may be continuous at a fixed rate, or intermittent.

As soon as the nozzle 9 has reached the end of the lining material 2, the blowing of the pressurized steam 11 is stopped and the lining material 2 cools. Thus the curable liquid resin cures and the lining material 2 forms a rigid FRP pipe.

Then, the metal parts 3 and 4 are removed and the ends of the lining material which project from the pipeline 1 are cut off, and the cut ends of the lining material 2 are properly treated. In this way the lining of the pipeline 1 is completed.

According to the first preferred aspect of the present invention, the procedure mentioned above is modified as follows: after the lining material 2 is inflated by introduction of compressed air through the air pipe 5 it is preheated by pressurized steam also injected through pipe 5. This steam is at a low pressure e.g. a pressure approximately equal to that of the compressed air. The pressurized steam may be replaced by hot air.

While the pressurized steam at a low pressure is being supplied, pressurized steam 11 at a high pressure is emitted from the nozzle 9 as in the first aspect of the present invention, so that the lining material 2 is heated. During this procedure, the nozzle 9 is moved as above.

When the above-mentioned procedure is carried out, the pressurized steam condenses in the lining material 2 and the condensate (drainage) accumulates in the lining material 2. Drainage in the vicinity of the nozzle 9 does not prevent the lining material 2 from being heated by the pressurized steam 11, because it is blown away by the pressurized steam 11 which blows off from the nozzle 9.

If drainage accumulates, the nozzle 9 immerses itself in the drainage, permitting the drainage to be heated by the pressurized steam 11. The heated drainage then rapidly heats the lining material 2. That part of the lining material which is above the drainage is heated by the pressurised steam passing through the drainage or, in the case of the first preferred aspect of the present invention, by the pressurized steam delivered through the air pipe 5.

However, there can be so much drainage that it prevents the lining material 2 from being heated by the pressurized steam 11, and it causes the lower part of the lining material to take too long a time before being sufficiently heated.

This situation is coped with by the second preferred aspect of the present invention, in which the nozzle 9 is moved together with a drainage removing unit which is positioned in front of the nozzle 9 within the lining material 2.

It is not necessary that the drainage removing unit removes the drainage completely in the lining material. The removing unit will be satisfactory if it removes the drainage to such an extent that any remaining in the vicinity of the nozzle 9 does not prevent the lining material 2 from being heated by the pressurized steam 11. Alternatively, the drainage removing unit may be one which stirs the drainage, permitting it to transmit the heat of the pressurized steam 11 to the lining material 2.

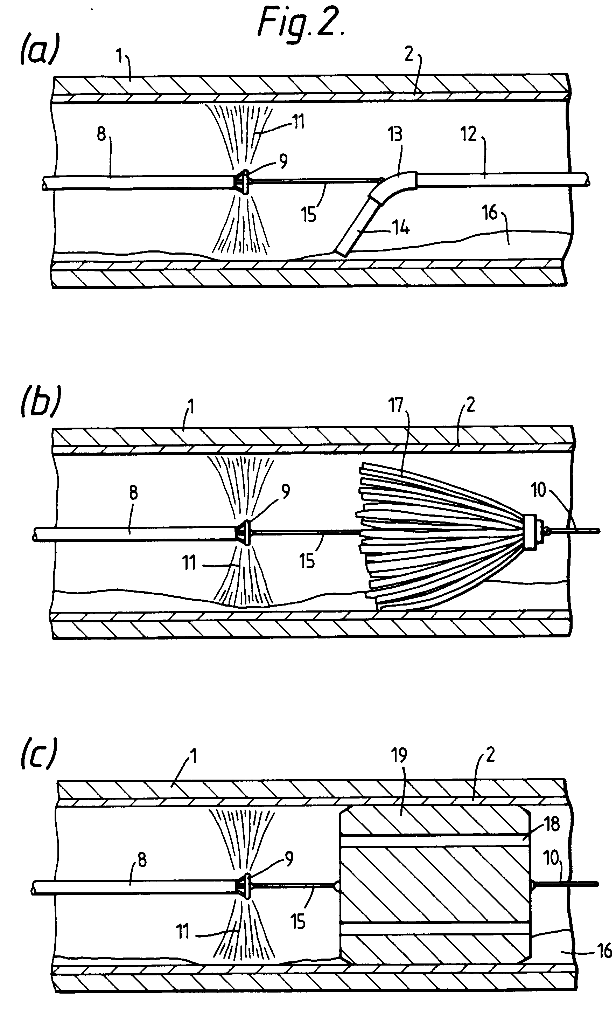

Fig. 2 shows examples of drainage removing unit. In Fig. 2(a), there is shown a suction discharge pipe 12. To the rear end of a discharge pipe 12 is joined a discharge nozzle 14 through a bent pipe 13. The discharge pipe 12 penetrates the metal part 4 and is open, or leads to a suction unit outside the lining material 2.

The bent pipe 13 and the nozzle 9 are joined to each other by the rope 15, so that as the pipe 12 is pulled, the discharge nozzle 14 and the nozzle 9 move together in the lining material 2.

Fig. 2(b) shows an embodiment in which the drainage removing unit is a mop 17 composed of yarn. The mop 17 is connected to the end of the pulling rope 10, and the mop 17 and the nozzle 9 are joined to each other by the rope 15.

As the pulling rope 10 is pulled, the mop 17 and the nozzle 9 move together in the lining material 2 and the mop 17 wipes off the drainage 16 which has accumulated in the lining material 2. Fig. 2(c) shows an example in which the drainage removing unit is a pig 19 having through-holes 18 therein to permit the passage of pressure fluid, including the pressurized steam. The pig 19 is attached to the end of the rope 10 and is also connected to the nozzle 9 by a rope 15.

As the rope 10 is pulled, the pig 19 and the nozzle 9 move together in the lining material 2 so as to discharge (push out) the drainage 16 which has accumulated in the lining material 2.

According to the method of the present invention, the lining material 2 is heated locally and rapidly directly by the pressurized steam 11 which is blown off from the nozzle 9. As the result, the curable liquid resin is cured rapidly.

The nozzle 9 emits pressurized steam 11, whose temperature depends on pressure. For example, steam under a pressure of 3kg/cm² has a temperature of about 143°C. This temperature is high enough for the strong heating of the lining material 2.

While the nozzle 9 is emitting the pressurized steam 11, the nozzle 9 is moved over the entire length of the lining material 2 so that lining material 2 is heated over its entire length. This heating cures the curable liquid resin, resulting in a rigid lining.

The pressurized steam 11 from the nozzle 9 does not rapidly increase the pressure within the lining material because its amount is small as compared with the total volume enclosed by the lining material 2. Moreover, the pressure in the lining material 2 is kept constant by discharging through the discharge pipe 6 as much pressure fluid as would increase the pressure.

According to the first preferred aspect of the present invention, heated fluid such as pressurized steam under low pressure is introduced within the lining material 2 to preheat it. This preheating prevents the lining material 2 from being pressurized excessively as the pressurized steam is under low pressure.

With this state maintained, the nozzle 9 which emits the pressurized steam (under high pressure) is moved through the lining material 2. The pressurized steam 11 more rapidly heats the lining material 2 since it has been preheated to a certain degree.

According to the second preferred aspect of the present invention, condensate or drainage 16 which has accumulated in the lining material 2 is stirred or removed by means of the removing unit, and immediately thereafter, the nozzle 9 moves through the lining material 2, emitting the pressurized steam 11, which heats the lining material 2 without interference by the drainage 16.

The method of the present invention need not exert an excessive pressure on the lining material. Therefore, it can be used to repair a time-worn pipeline 1 without causing any damage.

The lining material is preheated by introduction of pressurized steam under low pressure prior to the blowing of the pressurized steam 11 from the nozzle 9, this preheating accelerates the heating of the lining material 2 that takes place as the nozzle 9 moves, and also retards the temperature decrease of the lining material 2 that takes place after the nozzle 9 has passed by.

If a drainage removing unit so provided to remove or stir the drain while pressurized steam 11 is emitted the possibility is eliminated that the drainage prevents the lining material from being heated.

The effects of the present invention are demonstrated by the experiments which are explained below.

### Experimental Example 1

A pipeline 1, 48m long, was constructed of Hume pipes, each measuring 300mm in diameter and 2m long. Into the pipeline 1 was inserted a lining material 2. Into the lining material 2 was introduced compressed air (0.5kg/cm²), so that the lining material came into close contact with the inner surface of the pipeline 1. Seven temperature sensors were installed between the lining material 2 and the pipeline 1 at positions 0m, 2m, 5m, 15m, 30m, 45m, and 48m away from one end of the pipeline 1.

The lining material 2 is an SMC composed of an unsaturated polyester resin and glass fibres dispersed therein, with the viscosity of the polyester resin increased. This SMC is designed such that it cures at 70°C for 1 hour, or at 100°C for 3 minutes.

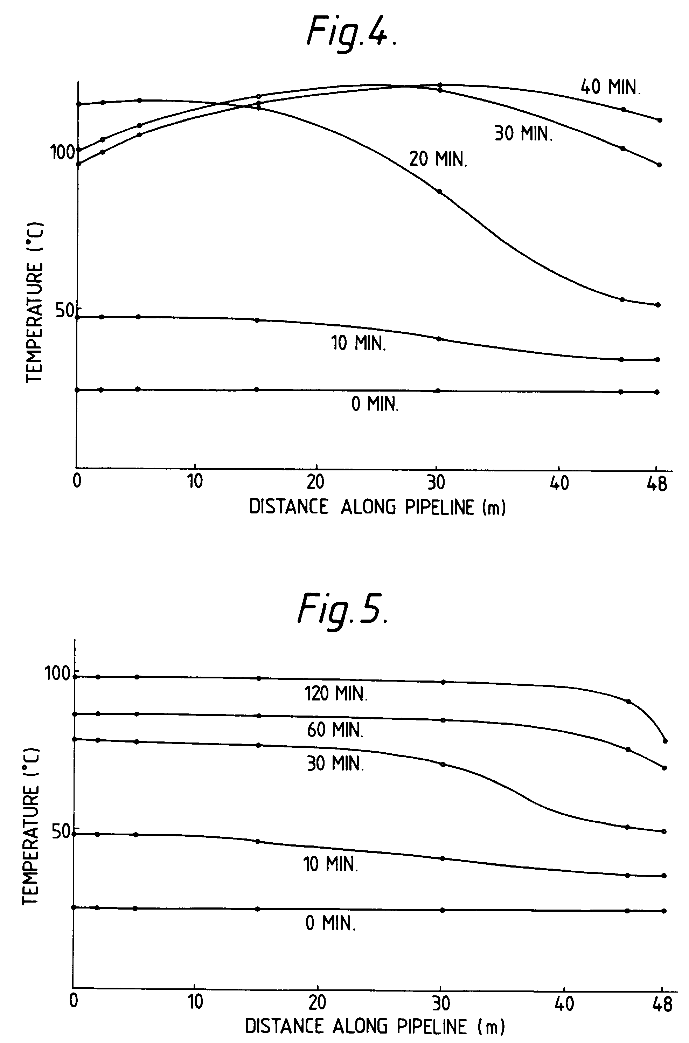

The pressurised steam 11 (3kg/cm²) was caused to blow from the nozzle 9, and at the same time, the nozzle 9 was moved at a rate of 0.5m/min from one end to the other of the lining material 2. The temperature change measured by the sensors is shown in Fig. 3.

It is noted from Fig. 3 that the lining material 2 is rapidly and locally heated by the pressurized steam 11 as the nozzle 9 moves and the heated lining material 2 remains hot (above 100°C) for about 6 minutes after the passage of the nozzle 9. This period is long enough for the SMC to cure completely.

Fig. 3 indicates that the temperature sensors registered a temperature slightly higher than 100. This is because the temperature sensors are attached to the outside of the lining material 2 through which heat conducts to the pipeline 1. In actual fact, however, the SMC generates heat as it cures so that the temperature within the lining material 2 reaches approximately 200°C.

As the nozzle 9 passes and the curing reaction of the SMC is completed, the local temperature of the lining material decreases because the lining material has its heat absorbed by the pipeline 1.

When the nozzle 9 has moved over the entire length of the lining material 2, the SMC everywhere in the lining material 2 cures, forming a rigid lining. The entire process takes about 90 minutes to complete.

### Experimental Example 2

A lining material 2 was inserted into a pipeline, with temperature sensors arranged between them as in the case of Experimental Example 1. The lining material 2 was inflated by introduction of compressed air so that it came into close contact with the inner surface of the pipeline 1.

Pressurized steam (0.5kg/cm²) was introduced into the lining material 2 through one end thereof, during which the compressed air in the lining material 2 was discharged from the other end of the lining material 2, so that the compressed air in the lining material 2 was replaced by the low pressure steam.

Ten minutes after the start of the introduction of the low pressure steam, the nozzle 9 emitting pressurized steam 11 (3kg/cm²) began to move at a rate of 2m/min with introducing the low pressure steam the air pipe 5. Fig. 4 shows the temperature which the temperature sensors registered after the start of the introduction of the low pressure steam into the lining material 2.

In this experimental example, the lining material 2 is entirely preheated by the low pressure steam introduced from one end thereof. Therefore, the lining material 2 is rapidly heated by the pressurized steam 11 which blows from the nozzle 9. Moreover, even after the nozzle 9 has passed by, low pressure steam is being supplied through one end of the lining material and hence the curing reaction continues without being restrained by heat conduction to the pipeline 1.

This makes it possible to move the nozzle 9 more rapidly. It is noted from Fig. 4 that when the nozzle 9 takes 34 minutes to move from one end to the other of the lining material 2, the temperature of the lining material is higher than 100°C throughout its length. Five minutes later, the SMC completely cures to form a rigid lining.

### Comparative Example

A lining material 2 was inserted into a pipeline 1, with temperature sensors arranged between them as in the case of Experiment Example 1. The lining material was inflated by introduction of compressed air so that it came into close contact with the inner surface of the pipeline 1.

Pressurized steam (0.5kg/cm²) was introduced into the lining material 2 through one end thereof, during which the compressed air was discharged from the other end of the lining material 2, so that the compressed air in the lining material 2 was replaced by low pressure steam. The pressure in the lining material 2 was kept at 0.5kg/cm². Fig. 5 shows the temperature which the temperature sensors registered.

In this comparative example, the lining material 2 is heated by low pressure steam introduced from one end thereof. Therefore, the temperature rises more rapidly at the end of the lining material, and the lining material takes about 60 minutes to exceed 70°C throughout its length after the start of the introduction of the low pressure steam.

It follows that the lining material takes about 120 minutes to form a rigid lining because SMC takes about 60 minutes to cure completely at 70°C.

## Claims

1. A method for lining a pipeline which includes placing in a pipeline (1) a tubular lining material (2) composed of fibres impregnated with a curable liquid resin, inflating the lining material (2) by means of pressure fluid until the lining material (2) comes into close contact with the inner surface of the pipeline (1), and steam-heating the material (2) to cure it, characterized in moving from one end to the other end of the lining material (2) a nozzle (9) emitting pressurized steam (11).

2. A method according to claim 1 which includes preheating the material (2) with a heated fluid.

3. A method according to claim 2 wherein the fluid is steam at a lower pressure than the pressurized steam.

4. A method according to any one of the preceding claims wherein the pressure of the pressurized steam is at least about 3kg/cm² (294.3 KPa), but the pressure within the tube formed by the material does not exceed 1kg/cm² (98.1 KPa).

5. A method according to any one of the preceding claims wherein the nozzle (9) is preceded along the pipeline by a drainage removal unit (12, 13, 14; 17; 19).

## Patentansprüche

1. Verfahren zum Auskleiden bzw. Innenverkleiden einer Rohrleitung bzw. eines Rohres, welches umfaßt: das Anordnen eines röhrenförmigen Auskleidungsmaterials (2), das aus mit einem härtbaren Weichharz imprägnierten bzw. getränkten Fasern besteht, in einer Rohrleitung bzw. einem Rohr (1), das Aufblähen des Auskleidungsmaterials (2) mittels Druckfluid, bis das Auskleidungsmaterial (2) in engen Kontakt mit der Innenfläche der Rohrleitung bzw. des Rohres (1) kommt, und das Dampferhitzen des Materials (2), um es auszuhärten, dadurch gekennzeichnet, daß von einem Ende des Auskleidungsmaterials (2) zum anderen eine Düse (9) bewegt wird, die unter Druck stehenden Dampf (11) abgibt.

2. Verfahren nach Anspruch 1, welches das Vorwärmen des Materials (2) mit einem erhitzten Fluid umfaßt.

3. Verfahren nach Anspruch 2, worin das Fluid Dampf mit einem geringeren Druck als jenem des unter Druck stehenden Dampfes ist.

4. Verfahren nach einem der vorangegangenen Ansprüche, worin der Druck des unter Druck stehenden Dampfs zumindest etwa 3 kg/cm² (294,3 kPa) beträgt, aber der Druck innerhalb des aus dem Material gebildeten Rohrs 1 kg/cm² (98,1 kPa) nicht übersteigt.

5. Verfahren nach einem der vorangegangenen Ansprüche, worin der Düse (9) entlang der Rohrleitung eine Niederschlagsentfernungseinheit (12, 13, 14; 17; 19) vorangeht.

## Revendications

1. Méthode pour chemiser un conduit qui inclut le placement dans un conduit (1) d'un matériau (2) de chemisage tubulaire composé de fibres imprégnées d'une résine liquide polymérisable, le gonflement du matériau de chemisage (2) au moyen d'un fluide de pression jusqu'à ce que le matériau (2) de chemisage vienne en contact intime avec la surface interne du conduit (1), et le chauffage par de la vapeur du matériau (2) pour le polymériser, caractérisée par le déplacement d'une extrémité à l'autre extrémité du matériau (2) de chemisage d'une buse (9) émettant de la vapeur (11) sous pression.

2. Méthode selon la revendication 1, qui inclut le préchauffage du matériau (2) avec un fluide chauffé.

3. Méthode selon la revendication 2, dans laquelle le fluide est de la vapeur à pression plus basse que la vapeur sous pression.

4. Méthode selon l'une quelconque des revendications précédentes, dans laquelle la pression de la vapeur sous pression est d'au moins environ 3 kg/cm² (294,3 kPa), mais la pression dans le tube formé par le matériau n'excède pas 1 kg/cm² (98,1 kPa).

5. Méthode selon l'une quelconque des revendications précédentes, dans laquelle la buse (9) est précédée le long du conduit par une unité d'élimination de drainage (12, 13, 14 ; 17 ; 19).
